# EUROPEAN PATENT APPLICATION

(11) **EP 4 692 248 A1**
(43) Date of publication of application: **11.02.2026**
(21) Application number: 24779794.7
(22) Date of filing: 21.03.2024
(51) Int. Cl.: C08L 101/12, B65D 81/26, C08K 5/098, C08L 9/00, C08L 53/02

(54) **OXYGEN-ABSORBING RESIN COMPOSITION, MOLDED ARTICLE, AND DEOXIDATION METHOD**

(30) Priority: 28.03.2023 JP 2023051535
(71) Applicant: MITSUBISHI GAS CHEMICAL COMPANY, INC., Chiyoda-ku Tokyo 100-8324 (JP)
(72) Inventor: YOKOYAMA Tomoko, Tokyo 125-8601 (JP); ITOH Takayoshi, Tokyo 125-8601 (JP)
(74) Representative: Müller-Boré & Partner Patentanwälte PartG mbB
(86) International application number: PCT/JP2024/010893
(87) International publication number: WO 2024/203671

(57) **Abstract**

Provided herein is an oxygen-absorbing resin composition containing an easily-oxidizable thermoplastic resin and a metal catalyst, in which the oxygen-absorbing resin composition exhibits oxygen-absorbing ability upon energy ray irradiation, and the metal catalyst is a fatty acid salt of manganese.

## Description

### Technical Field

The present invention relates to an oxygen-absorbing resin composition, a molded article thereof, and a deoxidizing method using the resin composition.

### Background Art

In the related art, oxygen scavengers for removing oxygen have been used for the purpose of preventing oxidation of various products susceptible to deterioration under the influence of oxygen, as typified by foods, pharmaceuticals, metal products, and electronic products. The form of the oxygen scavenger that was initially developed and is still widely used today is a granule or powder oxygen scavenger composition packed in a sachet.

In recent years, a resin material that exhibits oxygen absorption performance has been proposed as an oxygen scavenger that is easier to handle, has a high flexibility in shape, and has a wide range of applications (Patent Document 1).

The oxygen scavenger using the oxygen-absorbing resin preferably does not absorb oxygen during molding or storage of the resin material or during enclosing into a product from the viewpoint of maintaining its oxygen absorption performance, and on the other hand, the oxygen scavenger using the oxygen-absorbing resin is preferably one that requires a trigger to initiate oxygen absorption from the viewpoint of rapidly delivering the oxygen absorption performance during use. Patent Document 1 noted above proposes a method of initiating oxygen absorption upon trigger of irradiation with ultraviolet rays.

### Citation List

### Patent Document

Patent Document 1: JP 4978884 B

### Summary of Invention

### Technical Problem

However, an oxygen scavenger using such an oxygen-absorbing resin is liable to initiate oxygen absorption immediately after irradiation with energy rays as a trigger. For this reason, depending on the exposure time in the atmosphere, there are a problem of deactivation of the oxygen scavenger before enclosing together with a stored object, and a problem of being incapable of sustained oxygen absorption for a long period of time after enclosing together with a stored object. In particular, the problems mentioned above are more noticeable in industrial product applications where assembling work and the like require a long time and it may take a long time to enclose the oxygen scavenger together with an industrial product.

For this reason, there has been a demand for an oxygen-absorbing resin material that exhibits sufficient oxygen absorption performance even after being held in the atmosphere for a certain period of time after energy ray irradiation.

### Solution to Problem

That is, the essential constitution of the present invention is as follows.
[1] An oxygen-absorbing resin composition containing an easily-oxidizable thermoplastic resin and a metal catalyst, the oxygen-absorbing resin composition exhibits oxygen-absorbing ability upon energy ray irradiation, in which the metal catalyst is a fatty acid salt of manganese.
[2] The oxygen-absorbing resin composition according to [1], in which the content of the fatty acid salt of manganese is 0.001 parts by mass or more and 5 parts by mass or less in terms of manganese (Mn), per 100 parts by mass of the easily-oxidizable thermoplastic resin.
[3] The oxygen-absorbing resin composition according to [1] or [2], in which the content of the fatty acid salt of manganese is 0.001 parts by mass or more and 10 parts by mass or less in terms of manganese (Mn), per 100 parts by mass of the oxygen-absorbing resin composition.
[4] The oxygen-absorbing resin composition according to any one of [1] to [3], in which a fatty acid constituting the fatty acid salt of manganese has 4 or more and 22 or less carbon atoms.
[5] The oxygen-absorbing resin composition according to any one of [1] to [4], in which a fatty acid constituting the fatty acid salt of manganese is one or more selected from the group consisting of 2-ethylhexanoic acid, octanoic acid, stearic acid, oleic acid, and linoleic acid.
[6] The oxygen-absorbing resin composition according to any one of [1] to [5], in which the easily-oxidizable thermoplastic resin includes one or more selected from the group consisting of polybutadiene (X1), polyisoprene (X2), and a resin (Y) having a carbon-carbon double bond and a structural unit represented by General Formula (1) described below. 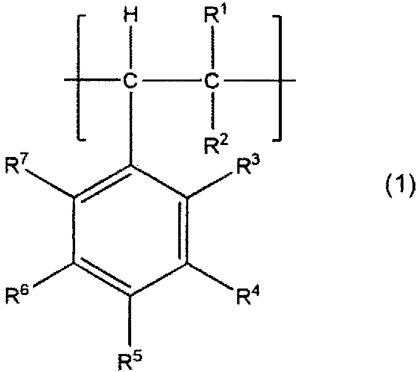 where R¹ to R⁷ may be the same as or different from each other and each represent -H, - CH₃, -CH₂R, -CHR₂, -CR₃, -OR, -COOR, -SiR₃, -O-SiR₃, -COCl, or a halogen atom, and R represents a linear or cyclic alkyl group, an alkenyl group, a halogenated alkyl group, a halogenated alkenyl group, or an allyl group.
[7] The oxygen-absorbing resin composition according to [6], in which the easily-oxidizable thermoplastic resin includes the polybutadiene (X1) and the resin (Y).
[8] The oxygen-absorbing resin composition according to [6] or [7], in which the polybutadiene (X1) is 1,2-polybutadiene.
[9] The oxygen-absorbing resin composition according to any one of [6] to [8], in which the resin (Y) is one or more selected from the group consisting of styrene-isoprene-styrene block copolymer and styrene-butadiene-styrene block copolymer.
[10] A molded article made of the oxygen-absorbing resin composition according to any one of [1] to [9].
[11] A deoxidizing method including: step (1) of irradiating the oxygen-absorbing resin composition according to any one of [1] to [9] with energy rays to produce an oxygen scavenger; and step (2) of enclosing the oxygen scavenger together with a stored object into a storage container, in which a time span during which the oxygen scavenger is held in the atmosphere, after the step (1) and until enclosing in the step (2), is 1 hour or more and 3 days or less.

### Advantageous Effects of Invention

According to the present invention, it is possible to provide an oxygen-absorbing resin composition that exhibits sufficient oxygen absorption performance even after energy ray irradiation and then held in the atmosphere for a certain period of time, a molded article thereof, and a deoxidizing method using the resin composition.

### Description of Embodiments

Embodiments of an oxygen-absorbing resin composition, a molded article, and a deoxidizing method according to the present invention will be described in detail below.

Note that, as used herein, the wording of "A to B" indicating a numerical range means "A or more and B or less" (in the case of A < B), or "A or less and B or more" (in the case of A > B). Furthermore, in the present invention, a combination of preferable aspects is a more preferable aspect.

### [Oxygen-absorbing resin composition]

The oxygen-absorbing resin composition of the present invention contains an easily-oxidizable thermoplastic resin and a metal catalyst, and exhibits oxygen-absorbing ability upon energy ray irradiation, and the metal catalyst is a fatty acid salt of manganese.
The oxygen-absorbing resin composition of the present invention has the constitution mentioned above, and hence exhibits sufficient oxygen absorption performance even after being held in the atmosphere for a certain period of time after energy ray irradiation.

Note that, as used herein, the "oxygen-absorbing resin composition that exhibits oxygen-absorbing ability upon irradiation with energy rays" means both (1) an oxygen-absorbing resin composition before energy ray irradiation, which has a capability to exhibit oxygen-absorbing ability upon irradiation with energy rays, and (2) an oxygen-absorbing resin composition after energy ray irradiation, which is exhibiting or in a state being capable of exhibiting oxygen-absorbing ability upon irradiation with energy rays. Here, the wording "in a state being capable of exhibiting oxygen-absorbing ability upon irradiation with energy rays" in the foregoing (2) means a state where the oxygen-absorbing resin composition is irradiated with energy rays and then accommodated in an oxygen barrier bag or the like having low oxygen permeability and is held in an environment without oxygen, and once placed in an environment with oxygen, the oxygen-absorbing resin composition exhibits oxygen-absorbing ability.

The reason why the oxygen-absorbing resin composition of the present invention produces the effect mentioned above is not clear, but one possible reason is as follows.

A known oxygen-absorbing resin composition containing an easily-oxidizable thermoplastic resin and a metal catalyst has a problem in which oxygen absorption initiates immediately after energy ray irradiation and becomes inactive after being held in the atmosphere for a certain period of time.

A possible cause of such a problem is that the known oxygen-absorbing resin composition absorbs a large amount of oxygen at the initial stage of the oxygen absorption reaction. For this reason, it is presumed that the known oxygen-absorbing resin composition absorbs a large amount of oxygen at the initial stage of the oxygen absorption reaction, and becomes almost inactive in the middle to late stages of the oxygen absorption reaction, so that the amount of oxygen absorbed is significantly decreased.

Therefore, as a result of intensive studies, the present inventors have found that the amount of oxygen absorbed at the initial stage of the oxygen absorption reaction after energy ray irradiation can be controlled by selecting the type of metal catalyst, and thereby having completed the present invention.

That is, the oxygen-absorbing resin composition of the present invention is particularly characterized by containing a fatty acid salt of manganese as a metal catalyst. It is presumable that inclusion of the predetermined metal catalyst enables to suppress the amount of oxygen absorbed at the initial stage of the oxygen absorption reaction after energy ray irradiation with, and thereafter, the amount of oxygen absorbed can be sufficiently maintained over a long period of time, or the amount of oxygen absorbed can be further increased as compared with that at the initial stage. As a result, it is presumable that the oxygen-absorbing resin composition after energy ray irradiation exhibits sufficient oxygen absorption performance even after being held in the atmosphere for a certain period of time.

Hereinafter, each component and the like will be described.

### (Easily-oxidizable thermoplastic resin)

The oxygen-absorbing resin composition of the present invention contains an easily-oxidizable thermoplastic resin.

The easily-oxidizable thermoplastic resin in the oxygen-absorbing resin composition of the present invention is a main agent for the oxygen-absorbing resin composition to exhibit oxygen-absorbing ability upon energy ray irradiations.

The easily-oxidizable thermoplastic resin is a resin having a moiety in which carbon and carbon are connected by a double bond, an allyl carbon (carbon adjacent to a carbon-carbon double bond), a structural unit represented by the following General Formula (1) described below, a hydroxy group, an ether group, an aldehyde group, a ketone group, a hydrogen atom bonded to a tertiary carbon atom, and the like, which undergo an oxidation reaction upon energy ray irradiation.

Examples of the easily-oxidizable thermoplastic resin include an organic polymer compound having a moiety in which carbon and carbon are connected by a double bond, an organic polymer compound having an allyl carbon (carbon adjacent to a carbon-carbon double bond), an organic polymer compound having a structural unit represented by General Formula (1) described below, an organic polymer compound having a hydroxy group, an organic polymer compound having an ether group, an organic polymer compound having an aldehyde group, an organic polymer compound having a ketone group, and an organic polymer compound having a hydrogen atom bonded to a tertiary carbon atom. These organic polymer compounds may be used singly, or two or more types thereof may be used in combination. In an organic polymer compound having a moiety in which carbon and carbon are connected by a double bond or an organic polymer compound having an allyl carbon, the carbon-carbon double bond or the allyl carbon may be present in the main chain or in the side chain of the polymer.

Among them, one or more selected from the group consisting of an organic polymer compound having a moiety in which carbon and carbon are connected by a double bond, an organic polymer compound having a structural unit represented by General Formula (1) described below, an organic polymer compound having a hydroxy group, an organic polymer compound having an ether group, an organic polymer compound having an aldehyde group, an organic polymer compound having a ketone group, and an organic polymer compound having a hydrogen atom bonded to a tertiary carbon atom are preferable, and one or more selected from an organic polymer compound having a moiety in which carbon and carbon are connected by a double bond, an organic polymer compound having a structural unit represented by General Formula (1) described below, and an organic polymer compound having a hydrogen atom bonded to a tertiary carbon atom are more preferable. Note that, the organic polymer compound having a moiety in which carbon and carbon are connected by a double bond also includes an organic polymer compound having an allyl carbon.

The easily-oxidizable thermoplastic resin preferably includes one or more selected from the group consisting of polybutadiene (X1), polyisoprene (X2), and a resin (Y) having a carbon-carbon double bond and a structural unit represented by General Formula (1) described below, more preferably includes polybutadiene (X1) and/or polyisoprene (X2), and the resin (Y), and further preferably includes polybutadiene (X1) and the resin (Y). The easily-oxidizable thermoplastic resin is more preferably one or more selected from the group consisting of polybutadiene (X1), polyisoprene (X2), and a resin (Y) having a carbon-carbon double bond and a structural unit represented by General Formula (1), further preferably made of polybutadiene (X1) and/or polyisoprene (X2) and the resin (Y), further preferably made of polybutadiene (X1) and the resin (Y). 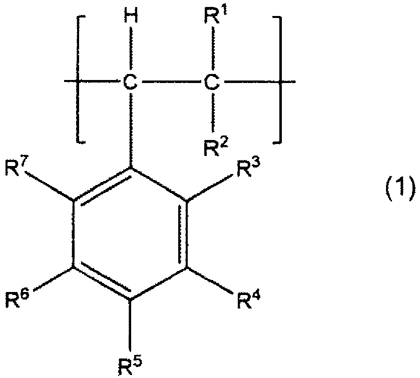 where R¹ to R⁷ each represent -H, -CH₃, -CH₂R, -CHR₂, -CR₃, -OR, -COOR, -SiR₃, -O-SiR₃, -COCl, or a halogen atom, which may be the same as or different from each other, and R represents a linear or cyclic alkyl group, an alkenyl group, a halogenated alkyl group, a halogenated alkenyl group, or an allyl group.

The polybutadiene (X1) is not particularly limited, and examples thereof include 1,4-polybutadiene and 1,2-polybutadiene. Among them, 1,2-polybutadiene is preferable from the viewpoint of oxygen absorption performance.

The polyisoprene (X2) is not particularly limited, and examples thereof include cis-1,4-polyisoprene, trans-1,4-polyisoprene, 1,2-polyisoprene, and 3,4-polyisoprene. Among them, cis-1,4-polyisoprene and 3,4-polyisoprene are preferable from the viewpoints of oxygen absorption performance and availability.

The resin (Y) has a carbon-carbon double bond and a structural unit represented by General Formula (1). The carbon-carbon double bond may be in the main chain or in the side chain of the resin.

The resin (Y) is not particularly limited, and examples thereof include styrene-isoprene-styrene block copolymer, styrene-butadiene-styrene block copolymer, styrene-butadiene rubber, and styrene-isoprene rubber. Among them, one or more selected from the group consisting of styrene-isoprene-styrene block copolymer and styrene-butadiene-styrene block copolymer are preferable, and styrene-isoprene-styrene block copolymer is more preferable.

In General Formula (1), R¹ to R⁷ each independently represent -H, -CH₃, -CH₂R, -CHR₂, -CR₃, -OR, -COOR, -SiR₃, -O-SiR₃, -COCl, or a halogen atom. Each R in R¹ to R⁷ independently represents a linear or cyclic alkyl group, an alkenyl group, a halogenated alkyl group, a halogenated alkenyl group, or an allyl group. Particularly preferred is a case where R¹ to R⁷ each are -H.

Examples of other easily-oxidizable thermoplastic resins include an organic polymer compound having a moiety in which carbon and carbon are connected by a double bond other than those listed above, and examples thereof include ethylene-methyl acrylate-cyclohexenylmethyl acrylate copolymer.

Examples of the organic polymer compound having a structural unit represented by General Formula (1) include hydrogenated styrene-butadiene rubber and hydrogenated styrene-isoprene rubber.

Examples of the organic polymer compound having a hydrogen atom bonded to a tertiary carbon atom include polypropylene and polymethylpentene.

The easily-oxidizable thermoplastic resin is preferably one or more selected from polybutadiene (X1), polyisoprene (X2), and the resin (Y), more preferably polybutadiene (X1) and the resin (Y), and still more preferably 1,2-polybutadiene and styrene-isoprene-styrene block copolymer.

Note that the components listed above may be used singly, or two or more types thereof may be used in combination.

When the easily-oxidizable thermoplastic resin includes polybutadiene (X1) and/or polyisoprene (X2) and the resin (Y), the content of the resin (Y) is not particularly limited, but is preferably 3 parts by mass or more and 1000 parts by mass or less, more preferably 5 parts by mass or more and 500 parts by mass or less, still more preferably 10 parts by mass or more and 200 parts by mass or less, and even more preferably 20 parts by mass or more and 100 parts by mass or less per 100 parts by mass of the polybutadiene (X1) and/or the polyisoprene (X2). When the content of the resin (Y) is within the range set forth above, the easily-oxidizable thermoplastic resin exhibits good oxygen absorption performance.

In addition, the content of the easily-oxidizable thermoplastic resin in the oxygen-absorbing resin composition is not particularly limited, but is preferably 10 mass% or more and 99 mass% or less, more preferably 10 mass% or more and 75 mass% or less, still more preferably 20 mass% or more and 50 mass% or less, and even more preferably 25 mass% or more and 40 mass% or less.

### (Metal catalyst)

The oxygen-absorbing resin composition of the present invention contains a metal catalyst.

The metal catalyst in the oxygen-absorbing resin composition of the present invention is a fatty acid salt of manganese.

By using a fatty acid salt of manganese as the metal catalyst, the amount of oxygen absorbed at the initial stage of the oxygen absorption reaction can be suppressed in the oxygen-absorbing resin composition after energy ray irradiation, and thereafter, the amount of oxygen absorbed can be sufficiently maintained for a long period of time, or the amount of oxygen absorbed can be further increased as compared with that at the initial stage.

The fatty acid salt of manganese is not particularly limited, and can be appropriately selected from known fatty acid salts and used, but from the viewpoint of oxygen absorption performance, the number of carbon atoms of the fatty acid constituting the fatty acid salt of manganese is preferably 4 or more and 22 or less, more preferably 6 or more and 18 or less, still more preferably 6 or more and 12 or less, and even more preferably 8 or more and 12 or less.

More specifically, the fatty acid constituting the fatty acid salt of manganese is preferably one or more selected from the group consisting of 2-ethylhexanoic acid, octanoic acid, stearic acid, oleic acid, and linoleic acid, more preferably one or more selected from the group consisting of 2-ethylhexanoic acid, octanoic acid, oleic acid, and linoleic acid, still more preferably one or more selected from the group consisting of octanoic acid, oleic acid, and linoleic acid, and even more preferably one or more selected from the group consisting of octanoic acid and tall oil fatty acid (mixture of oleic acid and linoleic acid).

The form of the fatty acid salt of manganese is not particularly limited, and may be a solid (powder) or a liquid under normal temperature and pressure, or may be a solution in which the fatty acid salt of manganese is dissolved or dispersed in a solvent. Among them, the form of the fatty acid salt of manganese is preferably a solid, and more preferably powder.

When the form of the fatty acid salt of manganese is a liquid or a solution, it is preferably supported on or impregnated into a carrier substance described later.

The content of the fatty acid salt of manganese in the easily-oxidizable thermoplastic resin is not particularly limited, but is preferably 0.001 parts by mass or more and 10 parts by mass or less, more preferably 0.001 parts by mass or more and 5 parts by mass or less, still more preferably 0.01 parts by mass or more and 3 parts by mass or less, still more preferably 0.01 parts by mass or more and 1.5 parts by mass or less, still more preferably 0.01 parts by mass or more and 1 part by mass or less, and even more preferably 0.05 parts by mass or more and 0.5 parts by mass or less in terms of manganese (Mn), per 100 parts by mass of the easily-oxidizable thermoplastic resin. The content of the fatty acid salt of manganese in the oxygen-absorbing resin composition is preferably 0.001 parts by mass or more and 10 parts by mass or less, more preferably 0.001 parts by mass or more and 5 parts by mass or less, still more preferably 0.01 parts by mass or more and 1 part by mass or less, and even more preferably 0.05 parts by mass or more and 0.5 parts by mass or less in terms of manganese (Mn), per 100 parts by mass of the oxygen-absorbing resin composition.

### (Other components)

The oxygen-absorbing resin composition of the present invention may contain a component other than the components listed above as long as the effects of the present invention are not impaired.

Examples of the component other than those listed above include a thermoplastic resin other than the easily-oxidizable thermoplastic resin, a carrier substance that supports a metal catalyst, and other known additives.

### <Thermoplastic resin other than easily-oxidizable thermoplastic resin>

The oxygen-absorbing resin composition may further contain a thermoplastic resin other than the easily-oxidizable thermoplastic resin (hereinafter, this thermoplastic resin is simply referred to as "thermoplastic resin" as well) from the viewpoint of improving the dispersibility of blended components, from the viewpoint of improving oxygen absorption performance, and from the viewpoint of improving moldability.

The thermoplastic resin is preferably a thermoplastic resin having high miscibility with the easily-oxidizable thermoplastic resin, or a thermoplastic resin having high oxygen permeability. Specific examples thereof include polyolefin resins, ethylene-based copolymers, soft polyvinyl chloride, polystyrene, polymethylpentene, silicone resins, and copolymers of polysiloxane and other resins, and one or more selected from the group consisting of polyolefin resins, ethylene-based copolymers, soft polyvinyl chloride, polystyrene, and polymethylpentene are preferable, one or more selected from the group consisting of polyolefin resins, ethylene-based copolymers, polystyrene, and polymethylpentene are more preferable, one or more selected from the group consisting of polyolefin resins and ethylene-based copolymers are still more preferable, and polyolefin resins are even more preferable.

Examples of the polyolefin resin include polyethylene, ethylene-α-olefin copolymer, polypropylene, propylene-ethylene random copolymer, propylene-ethylene block copolymer, and ethylene-cyclic olefin copolymer, and among them, polyethylene is preferable, and linear low-density polyethylene is more preferable.

Examples of the ethylene-based copolymer include ethylene-(meth)acrylic acid copolymers, ethylene-methyl (meth)acrylate, various ion-crosslinked products of ethylene-(meth)acrylic acid copolymers, and ethylene-vinyl acetate copolymers.

These thermoplastic resins other than the easily-oxidizable thermoplastic resin can be used singly, or two or more types thereof may be used in combination.

When the oxygen-absorbing resin composition contains a thermoplastic resin, the content of the thermoplastic resin is preferably 1 part by mass or more and 1000 parts by mass or less, more preferably 10 parts by mass or more and 500 parts by mass or less, still more preferably 100 parts by mass or more and 500 parts by mass or less, and even more preferably 100 parts by mass or more and 300 parts by mass or less, per 100 parts by mass of the easily-oxidizable thermoplastic resin.

### <Carrier substance supporting metal catalyst>

The oxygen-absorbing resin composition may further contain a carrier substance as necessary.

When the metal catalyst is in the form of a liquid or a solution, the metal catalyst is supported on or impregnated into the carrier substance and thereby enabling to create a form of a support (hereinafter, also referred to as "metal catalyst support") in which the metal catalyst is supported on or impregnated into the carrier substance. By supporting or impregnating the metal catalyst on or into the carrier substance, the contact area with oxygen can be increased, and the oxygen absorption rate or the amount of oxygen absorbed can be increased, and also the metal catalyst can be made into a powder form, whereby its handling can be simplified.

The carrier substance is not particularly limited, and examples thereof include silicon dioxide, zeolite, diatomaceous earth, and calcium silicate. The carrier substance is preferably an agglomerate having a size ranging from 0.1 to 200 µm during and after catalyst preparation in terms of excellent handleability. In addition, a carrier substance that undergoes deagglomeration and has a size ranging from 1 to 100 nm when it is dispersed in a resin is preferable because it gives a transparent resin composition when it is blended in a resin. As such a carrier substance, silicon dioxide is exemplified. The carrier substance is preferably one or more selected from the group consisting of silicon dioxide and calcium silicate, and more preferably silicon dioxide.

When the oxygen-absorbing resin composition contains a carrier substance, the content of the carrier substance is preferably 20 parts by mass or more and 1000 parts by mass or less, more preferably 50 parts by mass or more and 500 parts by mass or less, and still more preferably 50 parts by mass or more and 200 parts by mass or less, per 100 parts by mass of a liquid or a solution of the metal catalyst.

### <Additive>

The oxygen-absorbing resin composition can contain various additives as necessary.

The additive is not particularly limited, and known additives usually used in the oxygen-absorbing resin composition can be used, and examples thereof include photoinitiators, defoamers such as calcium oxide, lubricants such as zinc stearate and calcium stearate, antioxidants such as phenol-based and phosphorus-based antioxidants, colorants including organic and inorganic dyes and pigments such as titanium oxide, dispersants such as silane-based and titanate-based dispersants, polyacrylic acid-based water absorbers, fillers such as silica and clay, gas adsorbents such as zeolite and activated carbon, drying agents, and antibacterial agents.

Among them, a photoinitiator may be further contained from the viewpoint of further enhancing the oxygen absorption performance or from the viewpoint of reducing the amount of energy ray irradiation.

Examples of known photoinitiators include hydrogen abstraction type initiators, and intramolecular cleavage type initiators. In case of the hydrogen abstraction type initiator, the excited initiator molecule abstracts hydrogen from the resin to generate active radicals and thereby initiating an oxidation reaction. In case of the intramolecular cleavage type initiator, the excited initiator molecule undergoes α-cleavage to generate a radical, which is added to a double bond moiety of the resin to generate a new radical. This radical further abstracts hydrogen from the resin to generate active radicals, and thus the oxidation reaction proceeds. Examples of the hydrogen abstraction type initiator include but not particularly limited to benzophenones, thiazines, metal porphyrins, anthraquinones, xanthones, thioxanthones, fluorenones, and benzoquinones. Among them, fluorenones, thioxanthones, and anthraquinones are preferable. On the other hand, examples of the intramolecular cleavage type initiator include but not particularly limited to α-hydroxyketones (such as Irgacure 127, Irgacure 184, Irgacure 2959), benzyl ketals (such as Irgacure 651), acylphosphine oxides (such as Darocur TPO, Irgacure 819), and oxime esters (such as Irgacure OXE01, Irgacure OXE02). Among them, α-hydroxyketones and acylphosphine oxides are preferable.

When the oxygen-absorbing resin composition contains a photoinitiator, the content of the photoinitiator is preferably from 0.1 to 1 mass% in the oxygen-absorbing resin composition from the viewpoint of further improving the oxygen absorption performance or from the viewpoint of reducing the amount of energy ray irradiation.

Note that, from the viewpoints of suppressing migration of the photoinitiator from the oxygen-absorbing resin composition to the outside and improving the transparency and aesthetic appearance of the resulting molded article (such as a sheet or film), it is preferable that the oxygen-absorbing resin composition should be substantially free of photoinitiators. Here, the wording "substantially free of photoinitiators" means that the content of the photoinitiator is 0 mass% or more and less than 0.1 mass% in the oxygen-absorbing resin composition. The content of the photoinitiator is preferably 0 mass% or more and less than 0.01 mass%, more preferably 0 mass% or more and less than 0.001 mass%, and still more preferably 0 mass%. In particular, the oxygen-absorbing resin composition is preferably free of a benzophenone-based photoinitiator as a photoinitiator.

### (Energy rays to be irradiated)

The energy rays with which the oxygen-absorbing resin composition is irradiated to initiate oxygen absorption is not particularly limited, and examples thereof include ultraviolet rays, electron beams, α rays, β rays, γ rays, and X-rays. By irradiation with these energy rays, a carbon-hydrogen bond, or a carbon-carbon bond in the easily-oxidizable thermoplastic resin is cleaved to generate radicals, and thereby enabling to initiate an oxidation reaction.

Alternatively, oxygen absorption can be initiated by applying energy such as heat, high frequency waves, or ultrasonic waves.

Among them, the energy rays to be irradiated are preferably one or more selected from ultraviolet rays, electron beams, and γ rays, and more preferably ultraviolet rays.

The ultraviolet rays (UV) can be generated from, for example, an ultraviolet irradiation device including a high-pressure mercury lamp, a low-pressure mercury lamp, a metal halide lamp, an electrodeless lamp, or the like, and is more preferably generated from a low-pressure mercury lamp.

The wavelength of the ultraviolet rays generated from the ultraviolet irradiation device can be appropriately adjusted according to the composition of the oxygen-absorbing resin composition, the amount of throughput, and the like, and is not particularly limited, but is, for example, 100 nm or more and 400 nm or less, preferably 200 nm or more and 380 nm or less, and more preferably 250 nm or more and 370 nm or less.

The integrated light amount of ultraviolet rays can be appropriately adjusted according to the composition of the oxygen-absorbing resin composition or the amount of throughput, and is not particularly limited, but is, for example, 1 mJ/cm² or more and 20000 mJ/cm² or less, preferably 100 mJ/cm² or more and 10000 mJ/cm² or less, and more preferably 500 mJ/cm² or more and 5000 mJ/cm² or less.

### (Production method)

The method for producing the oxygen-absorbing resin composition of the present invention is not particularly limited, and examples thereof include the following preferred examples.

The oxygen-absorbing resin composition is obtained by mixing and kneading the easily-oxidizable thermoplastic resin and a metal catalyst at a temperature equal to or higher than the melting temperature of the resin, further mixing and kneading a thermoplastic resin other than the easily-oxidizable thermoplastic resin and/or an additive as necessary, and evenly dispersing the easily-oxidizable thermoplastic resin and the metal catalyst.

Note that, the metal catalyst may be prepared by previously preparing a metal catalyst-containing resin composition (masterbatch) containing a high concentration of a powdery metal catalyst or a metal catalyst support, and mixing and kneading the metal catalyst-containing resin composition and the easily-oxidizable thermoplastic resin at a temperature equal to or higher than the melting temperature of the resin.

The same applies to the case of adding an additive.

The blending amount of each component can be appropriately adjusted according to the content of each component constituting the oxygen-absorbing resin composition described above. In particular, before energy ray irradiation, the composition of the oxygen-absorbing resin composition is substantially the same as the blending composition, and the blending amount of each component is the same as the content of each component constituting the oxygen-absorbing resin composition described above.

The oxygen-absorbing resin composition prepared in this manner exhibits oxygen-absorbing ability upon energy ray irradiations.

After energy ray irradiation, the oxygen absorption reaction proceeds in an environment where oxygen exists, and thus it is preferable that the oxygen-absorbing resin composition be accommodated in an oxygen barrier bag or the like having low oxygen permeability and be held in an environment without oxygen until the oxygen-absorbing resin composition is used as an oxygen scavenger.

From the viewpoint of such handleability and the viewpoint of maintaining good oxygen absorption performance, the oxygen-absorbing resin composition before energy ray irradiation is preferably an oxygen-absorbing resin composition that has a capability to exhibit oxygen-absorbing ability upon irradiation with energy rays.

### [Molded article]

The molded article of the present invention is made of the oxygen-absorbing resin composition of the present invention. Such a molded article exhibits sufficient oxygen absorption performance even after being held in the atmosphere for a certain period of time after energy ray irradiation.

The size, shape, and the like of the molded article are not particularly limited, and a desired molded article can be formed by a known molding apparatus that is used for press molding, injection molding, extrusion molding, or the like.

The oxygen-absorbing resin composition has a high flexibility in shape design, and hence can be molded into a desired shape and used.

Specifically, the molded article can be used in various forms such as a film shape, a sheet shape, a small piece shape, and a lump shape.

The molded article can be produced by a known method.

Specifically, when the molded article has a film shape or a sheet shape, (1) the oxygen-absorbing resin composition may be melt-kneaded with an extruder, then extruded from a strand die, cooled, and pelletized with a pelletizer, and pellets made of the oxygen-absorbing resin composition may be pressed to obtain a film or a sheet, or (2) the oxygen-absorbing resin composition may be melt-kneaded with an extruder, and then made into a film with a T-die to obtain a film or a sheet.

When the molded article has a small piece shape or a lump shape, the oxygen-absorbing resin composition may be melt-kneaded with an extruder, then extruded from a strand die, cooled, and pelletized with a pelletizer, and molded by injection molding, blow molding, extrusion molding, vacuum molding, pressure molding, or the like to obtain a small piece shape molded article or a lump shape molded article.

### [Deoxidizing method]

The oxygen-absorbing resin composition of the present invention can be suitably used in the deoxidizing method as below.

That is, a preferred deoxidizing method of the present invention includes: (1) a step of irradiating the oxygen-absorbing resin composition with energy rays to obtain an oxygen scavenger; and (2) a step of enclosing the oxygen scavenger together with a stored object into a storage container, in which a time span during which the oxygen scavenger is held in the atmosphere, after the step (1) and until enclosing in the step (2), is 1 hour or more and 3 days or less.

The oxygen-absorbing resin composition of the present invention exhibits sufficient oxygen absorption performance even after being held in the atmosphere for a certain period of time after energy ray irradiation, and thus can exhibit sufficient oxygen absorption performance even in a method of use in which the oxygen scavenger is held in the atmosphere for, for example, 24 hours or more and 3 days or less.

### <Step (1)>

Step (1) is a step of irradiating the oxygen-absorbing resin composition with energy rays to afford an oxygen scavenger.

The oxygen-absorbing resin composition and the energy ray irradiation are as described above.

The oxygen-absorbing resin composition exhibits oxygen-absorbing ability after energy ray irradiation and can function as an oxygen scavenger. That is, the "oxygen scavenger" in the present deoxidizing method is an "oxygen-absorbing resin composition after energy ray irradiation, which is exhibiting or in a state being capable of exhibiting oxygen-absorbing ability upon energy ray irradiation" or a molded article of the oxygen-absorbing resin composition.

In such an oxygen scavenger, an oxygen absorption reaction gradually proceeds under an environment where oxygen exists. For this reason, in a case where it takes a long time to use the oxygen scavenger as an oxygen scavenger, that is, it takes a long time to enclose the oxygen scavenger together with a stored object into a storage container in step (2) described later, it is preferable that the oxygen scavenger be accommodated in an oxygen barrier bag or the like having low oxygen permeability and be held in an environment without oxygen in order to maintain good deoxidizing performance. At this time, apart from the oxygen scavenger used in the deoxidizing method of the present invention, another oxygen scavenger that exhibits oxygen absorption performance may coexist in the oxygen barrier bag in order to rapidly create a low oxygen atmosphere inside the oxygen barrier bag.

### <Step (2)>

Step (2) is a step of enclosing the oxygen scavenger obtained in the step (1) together with a stored object into a storage container.

The stored object is not particularly limited, and examples thereof include various products which are susceptible to deterioration under the influence of oxygen, such as foods, pharmaceuticals, metal products, and electronic products.

In particular, the deoxidizing method of the present invention is suitable for industrial product applications where assembling work and the like take a long time, and examples of suitable stored object include industrial products that take a long time to enclose, for example, metal products or electronic products.

The storage container is not particularly limited, and its size and shape needs to be appropriately selected in relation to the stored object, but from the viewpoint of creating the environment inside the container close to an oxygen-free state in a short time by an oxygen scavenger and maintaining that state, the material of the storage container is preferably a material having gas barrier properties (particularly oxygen barrier properties), and the storage container is more preferably an aluminum barrier bag having light shielding properties and gas barrier properties.

The method for sealing the storage container is not particularly limited, and the sealing may be simple sealing with slight air permeability, but is preferably hermetic sealing from the viewpoint of making the environment inside the container into a low oxygen state in a short time by an oxygen scavenger and maintaining the state.

### <After step (1) and until enclosing in step (2)>

The time span during which the oxygen scavenger is held in the atmosphere, after step (1) and until enclosing in step (2), is 1 hour or more and 3 days or less.

As described above, since the oxygen scavenger allows the oxygen absorption reaction to gradually proceed under an environment where oxygen exists, it is preferably as short as possible the time span during which the oxygen scavenger is held in the atmosphere after the oxygen-absorbing resin composition has been irradiated with energy rays, however, the oxygen scavenger made of the oxygen-absorbing resin composition of the present invention exhibits sufficient oxygen absorption performance even after having been held in the atmosphere for up to 3 days.

Here, the wording "the oxygen scavenger is held in the atmosphere" refers to a state in which the oxygen scavenger after the oxygen-absorbing resin composition has been irradiated with energy rays is present in the atmosphere until it is enclosed in the storage container, irrespective of whether or not the oxygen scavenger is in a stationary state. Note that, a case where the oxygen scavenger is in a state of being accommodated in the gas barrier bag in an oxygen-free state and exists in the atmosphere does not correspond to "the oxygen scavenger is held in the atmosphere".

The time span during which the oxygen scavenger is held in the atmosphere needs to be 1 hour or more and 3 days or less, but is preferably 2 days or less, more preferably 1 day or less, from the viewpoint of maintaining good oxygen absorption performance.

In addition, the oxygen-absorbing resin composition of the present invention exhibits sufficient oxygen absorption performance even after being held in the atmosphere for a certain period of time after energy ray irradiation, and hence is more preferable in a case where the time span during which the oxygen scavenger is held in the atmosphere is preferably 1 hour or more, more preferably 5 hours or more, still more preferably 10 hours or more, and even more preferably 20 hours or more. Note that, the oxygen-absorbing resin composition of the present invention can exhibit sufficient oxygen absorption performance as long as the time span during which the oxygen scavenger is held in the atmosphere is 1 day or more but 3 days or less, and therefore can be suitably used for industrial product applications and the like where assembling work and the like take a particularly long time.

That is, the known oxygen-absorbing resin composition has a problem of deactivation when the oxygen scavenger is held in the atmosphere for a certain period of time since oxygen absorption is initiated immediately after energy ray irradiation; however, the oxygen scavenger of the present invention exhibits sufficient oxygen absorption performance even after being held in the atmosphere for a certain period of time, and hence the effect of the oxygen scavenger of the present invention is remarkably exhibited particularly when being held in the atmosphere for a long period of time, whereby the oxygen scavenger of the present invention is more suitably used.

Although the embodiments of the present invention have been described above, the present invention is not limited to the above-described embodiments, and includes all aspects included in the concept of the present invention and the scope of the claims, and can be variously modified within the scope of the present invention.

### Examples

Hereinafter, the present embodiment will be described in detail using Examples and Comparative Examples, but the present embodiment can be modified as appropriate as long as the functions and effects of the present invention are produced.

### <Material>

Materials and the like used in Examples and Comparative Examples are listed below.

·Manganese 2-ethylhexanoate support: Prepared in Preparation Example 1 below.

### (Preparation Example 1)

A manganese 2-ethylhexanoate solution (available from TOEI CHEMICAL INDUSTRY CO., LTD., manganese content: 8 mass%) and silicon dioxide powder (available from Tosoh Corporation, average particle diameter: 6 µm) were mixed at a mass ratio of 4 : 5 to obtain a powdery manganese octoate support.
·Manganese octanoate powder: available from Mitsuwa Chemicals Co., Ltd., average particle diameter: 156 µm
·Manganese stearate powder: available from Mitsuwa Chemicals Co., Ltd., powder type, average particle diameter: 201 µm
·Tall oil fatty acid manganese support: Prepared in Preparation Example 2 below.

### (Preparation Example 2)

A tall oil fatty acid manganese support was prepared by the same method as in Preparation Example 1 except that a tall oil fatty acid manganese solution (Manganese content: 8 mass%, available from TOEI CHEMICAL INDUSTRY CO., LTD.) was used in place of manganese 2-ethylhexanoate solution.
·Cobalt bis(2-ethylhexanoate) support: Prepared in Preparation Example 3 below. (Preparation Example 3)

A powdery cobalt bis(2-ethylhexanoate) support was obtained in the same manner as in Preparation Example 1 except that a cobalt bis(2-ethylhexanoate) solution (Cobalt content: 8 mass%, available from TOEI CHEMICAL INDUSTRY CO., LTD.) was used instead of the manganese 2-ethylhexanoate solution.
·Syndiotactic 1,2-polybutadiene: available from ENEOS Materials Trading Co., Ltd., hereinafter referred to as "RB".
·Styrene-isoprene-styrene block copolymer: available from ENEOS Materials Trading Co., Ltd., hereinafter referred to as "SIS".
·Linear low-density polyethylene: available from Dow Inc., hereinafter referred to as "LLDPE".
·Commercially available oxygen scavenger: GE-100 available from MITSUBISHI GAS CHEMICAL COMPANY, INC.

### (Example 1)

### [1] Preparation of oxygen-absorbing resin composition

Manganese 2-ethylhexanoate support as a metal catalyst and RB, SIS and LLDPE each as the resin were blended so as to obtain the composition ratio shown in Table 1, and dry-blended, then kneaded and extruded at 150°C or higher and 170°C or lower with a small twin screw segment extruder ("2D15W" available from Toyo Seiki Seisaku-sho, Ltd.), extruded from a strand die, and cooled and cut with a pelletizer to obtain pellets (oxygen-absorbing resin composition).

### [Table 1]

**Table 1**

| | Oxygen-absorbing resin composition | | | | |
|---|---|---|---|---|---|
| | Metal catalyst (in terms of metal atoms) | Easily-oxidizable thermoplastic resin | | Thermoplastic resin | Total |
| | | RB | SIS | LLDPE | |
| parts by mass | 8.5(0.3) | 20 | 10 | Balance | 100 |

### [2] Preparation of molded article

The oxygen-absorbing resin composition obtained in the foregoing [1] was press-molded into a sheet shape having a thickness of 0.1 mm to obtain a molded article (150 mm × 150 mm) made of the oxygen-absorbing resin composition.

### [3] UV irradiation

The molded article obtained in the foregoing [2] was irradiated with ultraviolet light (UV) under the following conditions.

### [UV irradiation conditions]

·Light source: mercury lamp (available from EYE GRAPHICS COMPANY)
·UV wavelength: mainly 365 nm
·Integrated irradiation amount: 2000 mJ/cm² (Illuminance: 500 mW/cm², Irradiation time: 4 seconds)

### [4] Storage

The molded article after UV irradiation obtained in the foregoing [3] was cut into a size of 35 cm² (5 cm × 7 cm) to obtain a small piece. Note that, the time taken during this was about 1 minute.

One small piece thus obtained was enclosed together with the above-mentioned commercially available oxygen scavenger (GE-100) into an aluminum barrier bag (available from MITSUBISHI GAS CHEMICAL COMPANY, INC.). Thereafter, the barrier bag was stored at 25°C and 60% relative humidity for 5 days.

### (Example 2)

The operations of [1] to [4] were performed in the same manner as in Example 1 except that manganese octanoate powder was used as a metal catalyst in [1] of Example 1. Note that, in the composition ratio shown in Table 1, the amount of the manganese octanoate powder was blended so as to be 0.3 parts by mass in terms of metal atoms per 100 parts by mass of the oxygen-absorbing resin composition, and to be 1.0 parts by mass in terms of metal atoms per 100 parts by mass of the easily-oxidizable thermoplastic resin, and the amount of LLDPE was the balance.

### (Example 3)

The operations of [1] to [4] were performed in the same manner as in Example 1 except that manganese stearate powder was used as the metal catalyst in [1] of Example 1. Note that, in the composition ratio shown in Table 1, the amount of the manganese stearate powder was blended so as to be 0.3 parts by mass in terms of metal atoms per 100 parts by mass of the oxygen-absorbing resin composition, and to be 1.0 parts by mass in terms of metal atoms per 100 parts by mass of the easily-oxidizable thermoplastic resin, and the amount of LLDPE was the balance.

### (Example 4)

The operations of [1] to [4] were carried out in the same manner as in Example 1, except that a tall oil fatty acid manganese support was used as a metal catalyst in [1] of Example 1. Note that, the components were blended so as to obtain the composition ratio shown in Table 1.

### (Comparative Example 1)

The operations of [1] to [4] were performed in the same manner as in Example 1 except that a cobalt bis(2-ethylhexanoate) support was used as a metal catalyst in [1] of Example 1. Note that, the components were blended so as to obtain the composition ratio shown in Table 1.

### <Evaluation>

The following evaluations were performed using the molded articles after UV irradiation, which had been stored for 5 days in [4] of Examples 1 to 4 and Comparative Example 1. The results are shown in Table 2.

### (Amount of oxygen absorbed)

The amount of oxygen absorbed was measured by the following method.

[4] In the storing step, the small pieces of the molded article after UV irradiation, which had been stored for 5 days, were taken out from the gas barrier bag, one small piece of the molded article and 300 ml of air at 25°C were accommodated in an aluminum foil laminated plastic film bag (available from MITSUBISHI GAS CHEMICAL COMPANY, INC., size 180 mm × 250 mm, hereinafter referred to as "aluminum barrier bag"), and the opening was sealed by heat-sealing. Furthermore, the oxygen concentration (initial oxygen concentration) in the aluminum barrier bag at this time was measured.

The aluminum barrier bag was then immediately placed in a thermostatic chamber at 25°C and 60% relative humidity and held for 7 days. During this storage, the oxygen concentration (oxygen concentration after storage) in the aluminum barrier bag was measured at each of the 1-day (1d), 3-day (3d) and 7-day (7d) elapsed time points, the amount of oxygen absorbed (initial oxygen concentration - oxygen concentration after storage) at each elapsed time point was calculated, which was further divided by the area (35 cm²) of the small piece of the molded article to calculate the amount of oxygen absorbed (ml/cm²) per unit area of the molded article.

Note that, the oxygen concentration was measured with a gas analyzer ("Check Mate 3" available from MOCON, Inc.). The measurement was performed by inserting a hollow needle at the tip of a silicon tube for sample ring attached to the gas analyzer through a rubber sampling sheet previously attached to the aluminum barrier bag into the aluminum barrier bag, and measuring the oxygen concentration in the aluminum barrier bag.

The measurement was performed three times for each of Examples and Comparative Examples, and the average value for each of Examples and Comparative Examples was calculated. The results are shown in Table 2. It means that the larger the amount of oxygen absorbed is, the better the oxygen absorption performance is.

### (Proportion of oxygen absorbed after holding)

As an evaluation of oxygen absorption performance after being held in the atmosphere for a certain period of time, an amount of oxygen absorbed after being held in the atmosphere was calculated as follows.

From the amount of oxygen absorbed at the 3-day and 7-day elapsed time points, the amount of oxygen absorbed (7d - 3d) after 3 days elapsed and before 7 days elapsed relative to the total amount of oxygen absorbed (7d) during 7 days was calculated as the "proportion of oxygen absorbed after holding" [100 × (7d - 3d)/7d] (%).

In this example, a sample was rated as good when [100 × (7d - 3d)/7d] (%), the proportion of oxygen absorbed after holding after 3 days elapsed and before 7 days elapsed, was 30% or more, and a sample was rated as even better when [100 × (7d - 3d)/7d] (%) was 60% or more. The higher the proportion of oxygen absorbed after holding after 3 days elapsed and before 7 days elapsed is, the higher oxygen absorption performance can be exhibited, and the better the oxygen absorption performance can be maintained after holding in the atmosphere for 3 days.

### [Table 2]

**Table 2**

| | Metal catalyst (fatty acid metal salt) | | Amount of oxygen absorbed (ml/cm²) | | | Proportion of oxygen absorbed after holding (%) |
|---|---|---|---|---|---|---|
| | Metal type | Fatty acid type | 1d | 3d | 7d | 100 × (7d - 3d)/7d |
| Example 1 | Mn | 2-Ethylhexanoic acid | 0.00 | 0.25 | 0.42 | 40.2 |
| Example 2 | | Octanoic acid | 0.00 | 0.14 | 0.45 | 69.3 |
| Example 3 | | Stearic acid | 0.00 | 0.19 | 0.29 | 34.9 |
| Example 4 | | Tall oil fatty acid | 0.00 | 0.03 | 0.36 | 91.1 |
| Comparative Example 1 | Co | 2-Ethylhexanoic acid | 0.26 | 0.53 | 0.62 | 15.1 |

As shown in Table 2, in the case of an oxygen-absorbing resin composition containing an easily-oxidizable thermoplastic resin and a metal catalyst and exhibiting oxygen-absorbing ability upon energy ray irradiation, when the metal catalyst was a fatty acid salt of manganese, the amount of oxygen absorbed was small by the third day, and a sufficient amount of oxygen absorbed was confirmed even after 3 days elapsed, and it was confirmed that sufficient oxygen absorption performance was exhibited even when the composition had been held in the atmosphere for a certain period of time (such as 3 days) (Examples 1 to 4). This shows that the oxygen-absorbing resin composition of the present invention can suppress the amount of oxygen absorbed at the initial stage of the oxygen absorption reaction, can thereafter sufficiently maintain the amount of oxygen absorbed for a long period of time, and can further increase the amount of oxygen absorbed as compared with that at the initial stage.

In contrast, it was confirmed that when the metal catalyst was not a fatty acid salt of manganese, a large amount of oxygen was absorbed by the third day, the improvement in the amount of oxygen absorbed after 3 days elapsed was small, and the amount of oxygen absorbed decreases at an early stage, so that sufficient oxygen absorption performance was incapable of exhibiting in the long term (Comparative Example 1).

## Claims

1. An oxygen-absorbing resin composition comprising an easily-oxidizable thermoplastic resin and a metal catalyst, the oxygen-absorbing resin composition exhibits oxygen-absorbing ability upon energy ray irradiation,
wherein the metal catalyst is a fatty acid salt of manganese.

2. The oxygen-absorbing resin composition according to claim 1, wherein a content of the fatty acid salt of manganese is 0.001 parts by mass or more and 5 parts by mass or less in terms of manganese (Mn), per 100 parts by mass of the easily-oxidizable thermoplastic resin.

3. The oxygen-absorbing resin composition according to claim 1 or 2, wherein a content of the fatty acid salt of manganese is 0.001 parts by mass or more and 10 parts by mass or less in terms of manganese (Mn), per 100 parts by mass of the oxygen-absorbing resin composition.

4. The oxygen-absorbing resin composition according to any one of claims 1 to 3, wherein a fatty acid constituting the fatty acid salt of manganese has 4 or more and 22 or less carbon atoms.

5. The oxygen-absorbing resin composition according to any one of claims 1 to 4, wherein a fatty acid constituting the fatty acid salt of manganese is one or more selected from the group consisting of 2-ethylhexanoic acid, octanoic acid, stearic acid, oleic acid, and linoleic acid.

6. The oxygen-absorbing resin composition according to any one of claims 1 to 5, wherein the easily-oxidizable thermoplastic resin includes one or more selected from the group consisting of polybutadiene (X1), polyisoprene (X2), and a resin (Y) having a carbon-carbon double bond and a structural unit represented by General Formula (1) described below. 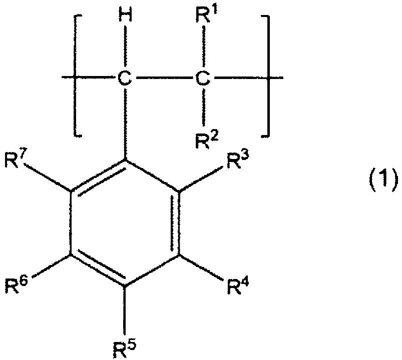 where R¹ to R⁷ may be the same or different from each other and each represent -H, - CH₃, -CH₂R, -CHR₂, -CR₃, -OR, -COOR, -SiR₃, -O-SiR₃, -COCl, or a halogen atom, and R represents a linear or cyclic alkyl group, an alkenyl group, a halogenated alkyl group, a halogenated alkenyl group, or an allyl group.

7. The oxygen-absorbing resin composition according to claim 6, wherein the easily-oxidizable thermoplastic resin includes the polybutadiene (X1) and the resin (Y).

8. The oxygen-absorbing resin composition according to claim 6 or 7, wherein the polybutadiene (X1) is 1,2-polybutadiene.

9. The oxygen-absorbing resin composition according to any one of claims 6 to 8, wherein the resin (Y) is one or more selected from the group consisting of styrene-isoprene-styrene block copolymer and styrene-butadiene-styrene block copolymer.

10. A molded article made of the oxygen-absorbing resin composition according to any one of claims 1 to 9.

11. A deoxidizing method comprising: step (1) of irradiating the oxygen-absorbing resin composition according to any one of claims 1 to 9 with energy rays to produce an oxygen scavenger;
step (2) of enclosing the oxygen scavenger together with a stored object into a storage container,
wherein a time span during which the oxygen scavenger is held in the atmosphere, after the step (1) and until enclosing in the step (2), is 1 hour or more and 3 days or less.
